# EUROPEAN PATENT APPLICATION

(11) **EP 4 797 357 A1**
(43) Date of publication of application: **26.08.2026**
(21) Application number: 24897863.7
(22) Date of filing: 08.10.2024
(51) Int. Cl.: H01M 4/62, H01M 4/134, H01M 4/131, H01M 10/052

(54) **CONDUCTIVE MATERIAL SLURRY, POSITIVE ELECTRODE, AND SECONDARY BATTERY COMPRISING SAME**

(30) Priority: 29.11.2023 KR 20230168866
(71) Applicant: Dongjin Semichem Co., Ltd., Incheon 22824 (KR)
(72) Inventor: KIM, Do Hun, Hwaseong-si, Gyeonggi-do 18635 (KR); YANG, Hwi Chan, Hwaseong-si, Gyeonggi-do 18635 (KR); LEE, Joo Cheol, Hwaseong-si, Gyeonggi-do 18635 (KR); CHO, Young Hoon, Hwaseong-si, Gyeonggi-do 18635 (KR); KIM, Seung Du, Hwaseong-si, Gyeonggi-do 18635 (KR); GIM, Hyeon Seo, Hwaseong-si, Gyeonggi-do 18635 (KR); NAM, Seong Hee, Hwaseong-si, Gyeonggi-do 18635 (KR)
(74) Representative: Grünecker Patent- und Rechtsanwälte PartG mbB
(86) International application number: PCT/KR2024/015314
(87) International publication number: WO 2025/116264

(57) **Abstract**

Disclosed is a conductive material slurry having excellent dispersion stability. According to one aspect, provided is a conductive material slurry comprising a conductive material, dispersants, and a solvent, wherein the dispersants include a first dispersant and a second dispersant which is different from the first dispersant, the first dispersant comprises a polymer having a heteroatom, and the second dispersant comprises a polymer having a group which is capable of hydrogen bonding.

## Description

### [Technical Field]

The present disclosure relates to a conductive material slurry, and more specifically, to a conductive material slurry, a positive electrode, and a secondary battery comprising the same.

### [Background Art]

A secondary battery has been continuously developing along with steady research since its appearance in the 1990s. Research and development are being carried out together not only for positive electrode/negative electrode active materials, electrolyte, and separator, which are main constituent elements of the secondary battery, but also for auxiliary elements performing a role of complementing and improving characteristics thereof. For the development of a high-capacity secondary battery, it is necessary for a thickness of an electrode to be increased, and it is necessary to form an effective conductive path in order to receive electrons from a current collector.

However, there was a problem that performance of a battery is not sufficiently exhibited during independent use because electrical conductivity of the positive electrode active material is very low. In order to solve such a problem, a method of manufacturing a conductive material slurry by dispersing a conductive material in a solvent and mixing them in a wet manner is being employed.

Meanwhile, because graphene, which is one type of the conductive material, has many functional groups (-OH, -COOH) on a surface thereof, there was a problem that dispersion stability of the conductive material slurry is lowered due to high polarity and low hydrogen bonding strength of the solvent when a general dispersant is used.

Also, in a manufacturing process of the positive electrode, a problem occurred in that the graphene becomes graphitized as the graphene, which should exhibit conductivity by being attached to a surface of positive electrode active material particles, forms aggregates (i.e., aggregation) due to carbon-carbon attraction. Accordingly, although a large amount of graphene should be input during manufacture of the conductive material slurry in order to impart a conductive effect, there was a problem in that energy density of the battery is lowered because the large amount of graphene may not contribute to capacity of the battery.

### [Disclosure]

### [Technical Problem]

According to one aspect of the present disclosure, there is provided a conductive material slurry capable of improving dispersion stability of the conductive material slurry.

According to another aspect of the present disclosure, there is provided a conductive material slurry capable of lowering internal resistance of a cell and increasing capacity retention.

According to still another aspect of the present disclosure, there is provided a positive electrode in which a conductive material is evenly disposed on a surface of positive electrode active material particles.

Another object of the present disclosure is to provide a secondary battery with improved electrochemical performance.

The objects of the present disclosure are not limited to the above-mentioned objects, and other objects and advantages of the present disclosure, which are not mentioned above, may be understood from the following descriptions and more clearly understood from the embodiments of the present disclosure. In addition, it can be easily understood that the objects and advantages of the present disclosure may be realized by means described in the specification and a combination thereof.

### [Technical Solution]

According to a first aspect of the present disclosure, a conductive material slurry comprising a conductive material; a dispersant; and a solvent is provided, wherein the dispersant comprises a first dispersant and a second dispersant different from the first dispersant, the first dispersant comprises a polymer having a heteroatom, and the second dispersant comprises a polymer having a group which is capable of hydrogen bonding.

According to a second aspect of the present disclosure, in the first aspect, the conductive material may have a full width at half maximum (FWHM) of a peak resulting from a (002) crystal plane of 0.3 to 100 based on X-ray diffraction (XRD) analysis.

According to a third aspect of the present disclosure, in the first or second aspect, the conductive material may comprise at least one of graphene and carbon nanotube.

According to a fourth aspect of the present disclosure, in the third aspect, a weight ratio of the graphene and the carbon nanotube may be 1:9 to 9:1.

According to a fifth aspect of the present disclosure, in the third or fourth aspect, an oxygen content of the graphene may be 10% or less based on elemental analysis (EA).

According to a sixth aspect of the present disclosure, in any one of the first to fifth aspects, the heteroatom may comprise at least one of a nitrogen atom, an oxygen atom, a sulfur atom, and a fluorine atom.

According to a seventh aspect of the present disclosure, in any one of the first to sixth aspects, a weight average molecular weight (M_{w}) of the first dispersant may be 5,000 to 500,000 g/mol.

According to an eighth aspect of the present disclosure, in any one of the first to seventh aspects, the first dispersant may comprise at least one selected from the group consisting of nitrile butadiene rubber, poly(ethylene oxide), poly(propylene oxide), poly(vinyl acetate), poly(butylene terephthalate), poly(ethylene naphthalate), polyvinylidene fluoride, polyetherimide, polyaryleneethernitrile, polyaryleneethersulfone, polyetheretherketone, polysulfone, polytetrafluoroethylene, poly(phenylene sulfide), poly(pentafluorostyrene), poly(phenylene oxide), polyacrylonitrile, poly(vinyl fluoride), polychlorotrifluoroethylene, polyimide, polycarbonate, poly(vinyl sulfone), poly(ethersulfone), poly(vinyl nitrile), polyacrylate, polymethacrylate, poly(vinyl acetate), polycaprolactone, cellulose triacetate, and polyvinylpyrrolidone.

According to a ninth aspect of the present disclosure, in any one of the first to eighth aspects, the group which is capable of hydrogen bonding may comprise at least one of a hydroxy group, a carboxyl group, a hydroperoxy group, a hemiacetal group, a hemiketal group, an oxime group, a phosphono group, a phosphate group, a carboxamide group, an amine group, a primary ketimine group, a primary aldimine group, a ketone group, a carbonate ester group, a carboalkoxy group, a methoxy group, a peroxy group, an ether group, an acetal group, a ketal group, an ortho-ester group, a methylenedioxy group, an ortho carbonate ester group, a cyanic acid salt group, a nitrate salt group, a nitro-oxy group, a sulfo group, a thiono ester group, a boronate group, a borinate group, a quaternary ammonium ion group, a secondary ketimine group, a secondary aldimine group, an imide group, an azide group, an azo group, an isocyanic acid salt group, an isonitrile group, a nitro group, a nitroso group, a carbam acid salt group, and an isothiocyanate group, and specifically, may comprise any one or more of a hydroxy group and an amine group.

According to a tenth aspect of the present disclosure, in any one of the first to ninth aspects, a weight average molecular weight (M_{w}) of the second dispersant may be 10,000 to 350,000 g/mol.

According to an eleventh aspect of the present disclosure, in any one of the first to tenth aspects, the second dispersant may comprise at least one selected from the group consisting of cellulose, ethyl cellulose, poly(vinyl alcohol), poly(acrylic acid), poly(methacrylic acid), cellulose acetate, cellulose nitrate, chitosan, cellulose propionate, cellulose acetate propionate, cellulose acetate butyrate, methyl cellulose, ethyl methyl cellulose, hydroxyethyl cellulose, hydroxypropyl cellulose, hydroxyethylmethyl cellulose, hydroxypropylmethyl cellulose, ethyl hydroxyethyl cellulose, polyhydroxyethylmethacrylate, polyethyleneimine, alginate, polyhydroxyethylacrylate, starch, hyaluronic acid, pullulan, pectin, polyglycerol, lignin, xylan, galactomannan, and polyhydroxystyrene.

According to a twelfth aspect of the present disclosure, in any one of the first to eleventh aspects, a weight ratio of the first dispersant and the second dispersant may be 1:0.4 to 1:2.3.

According to a thirteenth aspect of the present disclosure, in any one of the first to twelfth aspects, with respect to 100 parts by weight of the conductive material, a content of the first dispersant may be 2.2 to 200 parts by weight, and a content of the second dispersant may be 1 to 90 parts by weight.

According to a fourteenth aspect of the present disclosure, in any one of the first to thirteenth aspects, the solvent may comprise a polar aprotic solvent.

According to a fifteenth aspect of the present disclosure, in any one of the first to fourteenth aspects, based on a total solid content of the conductive material slurry, a carbon content may be 82 wt% or more.

According to a sixteenth aspect of the present disclosure, a positive electrode comprising a conductive material; a dispersant; a positive electrode active material; and a binder is provided, wherein the dispersant comprises a first dispersant and a second dispersant different from the first dispersant, the first dispersant comprises a polymer having a heteroatom, and the second dispersant comprises a polymer having a group which is capable of hydrogen bonding. Here, the positive electrode may be characterized by any one of the first to fifteenth aspects.

According to a seventeenth aspect of the present disclosure, in the sixteenth aspect, the positive electrode active material comprises a lithium transition metal oxide, and the lithium transition metal oxide may comprise at least one selected from the group consisting of Liₓ₁CoO₂(0.5<x1<1.3), Liₓ₂NiO₂(0.5<x2<1.3), Liₓ₃MnO₂(0.5<x3<1.3), Liₓ₄Mn₂O₄(0.5<x4<1.3), Liₓ₅(Niₐ₁Co_{b1}Mn_{c1})O₂(0.5<x5<1.3, 0<a1<1, 0<b1<1, 0<c1<1, a1+b1+c1=1), Liₓ₆Ni_{1-y1}Co_{y1}O₂(0.5<x6<1.3, 0<y1<1), Liₓ₇Co_{1-y2}Mn_{y2}O₂(0.5<x7<1.3, 0≤y2<1), Liₓ₈Ni_{1-y3}Mn_{y3}O₂(0.5<x8<1.3, 0≤y3<1), Liₓ₉(Niₐ₂Co_{b2}Mn_{c2})O₄(0.5<x9<1.3, 0<a2<2, 0<b2<2, 0<c2<2, a2+b2+c2=2), Liₓ₁₀Mn_{2-z1}Ni_{z1}O₄(0.5<x10<1.3, 0<z1<2), Liₓ₁₁Mn_{2-z2}Co_{z2}O₄(0.5<x11<1.3, 0<z2<2), Liₓ₁₂CoPO₄(0.5<x12<1.3), Liₓ₁₃FePO₄(0.5<x13<1.3), Li_{A1}Ni_{B1}Co_{C1}Mn_{D1}Al_{E1}O₂(A1=0.5 or more and 1.3 or less, B1+C1+D1+E1=1, 0<B1<1, 0<C1<1, 0<D1<1, 0<E1<1), Li_{A2}Ni_{B2}Co_{C2}Al_{D2}O₂(A2=0.5 or more and 1.3 or less, B2+C2+D2=1, 0<B2<1, 0<C2<1, 0<D2<1) and Li_{A3}Mn_{B3}Fe_{C3}PO₄(0.5<A3<1.3, B3+C3=1, 0<B3<1, 0<C3<1).

According to an eighteenth aspect of the present disclosure, a secondary battery comprising the positive electrode according to the sixteenth or seventeenth aspect; a negative electrode; a separator interposed between the positive electrode and the negative electrode; and an electrolyte solution is provided. Here, the secondary battery may be characterized by any one of the first to fifteenth aspects.

The technical solutions for solving the problems do not list all of the features of the present disclosure. Various features of the present disclosure and advantages and effects according thereto may be understood in more detail with reference to the specific description below.

### [Advantageous Effects]

According to one aspect of the present disclosure, dispersion stability of a conductive material slurry may be improved by minimizing a phenomenon in which a conductive material is aggregated. Accordingly, internal resistance of a secondary battery may be lowered and at the same time, a capacity retention may be increased.

According to another aspect of the present disclosure, a positive electrode in which a conductive material is evenly disposed on a surface of positive electrode active material particles may be implemented.

According to still another aspect of the present disclosure, a secondary battery having excellent electrochemical performance may be implemented.

In addition to the above-described effects, specific effects of the present disclosure will be described together while describing specific details for carrying out the invention below. Also, the effects of the present disclosure are not limited to the effects mentioned above, and can be easily implemented by the means described in the specification and a combination thereof.

### [Mode for Disclosure]

In this specification, expressions in the singular include expressions in the plural unless the context clearly dictates otherwise.

In this specification, "at least one of a, b and c" may include a, b, or c independently, or may include a combination of two or more selected from the group consisting of a, b, and c.

When a plurality of embodiments are described in this specification, each embodiment may be combinable unless specifically stated otherwise. In this case, the effects of the present disclosure may be defined as including effects originating from each embodiment and effects occurring as each embodiment is organically combined. For example, even if Embodiment 1 and 2 are each independently described in this specification, Embodiment 1 and 2 may be organically combined with each other unless the context clearly dictates otherwise, and the effects of the present disclosure may include effects occurring by combining Embodiment 1 and 2.

In this specification, a range of numerical values indicated using the term 'to' indicates a range of numerical values including values described before and after the term as a lower limit value and an upper limit value, respectively. When numerical values as the upper limit and the lower limit of an arbitrary numerical range are each disclosed as a plurality, the range of numerical values disclosed in this specification may be understood as an arbitrary numerical range having an arbitrary one value among the plurality of lower limit values and an arbitrary one value among the plurality of upper limit values as the lower limit value and the upper limit value, respectively. For example, when described in the specification as a to b, or c to d, it may be understood that a or more and b or less, a or more and d or less, c or more and d or less, or c or more and b or less are described.

In this specification, terms such as "about" or "substantially" mean a reasonable amount of deviation of a modified term such that a final result does not significantly change. Such terms may be interpreted as including a deviation of at least ±5% or at least ±10% within a limit where the deviation does not invalidate the meaning of the word by modifying the same.

In this specification, "weight average molecular weight" or "number average molecular weight" as a standard polystyrene-equivalent molecular weight may be analyzed through a gel permeation chromatography (GPC) apparatus. For example, in the case of a GPC analysis method, a developing solvent may be set to tetrahydrofuran (THF), a column to PL Olexis of Polymer Laboratories, a sample concentration to 5 mg/mL, 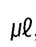 a sample injection amount to 100 , a flow rate to 1 mL/min, a detector to Agilent High Temperature RI detector, and a column temperature to 40°C.

According to one aspect of the present disclosure, a conductive material slurry including a conductive material; a dispersant; and a solvent is provided, wherein the dispersant includes a first dispersant and a second dispersant different from the first dispersant, the first dispersant includes a polymer having a heteroatom, and the second dispersant includes a polymer having a group which is capable of hydrogen bonding. According to one aspect of the present disclosure, as the conductive material slurry includes the first dispersant including the polymer having the heteroatom and the second dispersant including the polymer having the group which is capable of hydrogen bonding, a phenomenon in which the conductive material is aggregated is minimized, and thus dispersion stability of the conductive material slurry may be improved. Accordingly, internal resistance of a secondary battery may be lowered and at the same time, a capacity retention may be increased.

Hereinafter, a configuration of the present disclosure will be described in more detail.

### 1. Conductive material slurry

### Conductive material

The conductive material according to the present disclosure may perform a function of increasing conductivity between positive electrode active material particles or with a metal current collector, and may minimize an electrode binder included in an electrode slurry from acting as an insulator.

In some embodiments of the present disclosure, the conductive material may have a full width at half maximum (FWHM) of a peak resulting from a (002) crystal plane of 0.2 to 100, 0.3 to 99, 0.3 to 95, or 5 to 95 based on X-ray diffraction (XRD) analysis. Here, the full width at half maximum may mean a width of a point that is half of a maximum peak corresponding to the (002) crystal plane. According to some embodiments of the present disclosure, when the full width at half maximum in the (002) crystal plane of the conductive material satisfies the numerical range, re-stacking within graphene is small, and thus an effect of increasing conductivity between positive electrode active material particles or with the metal current collector may be further exhibited.

The conductive material according to the present disclosure may include at least one of graphene and carbon nanotube, specifically may include graphene and carbon nanotube, and more specifically may include graphene and multi-walled carbon nanotube. According to some embodiments of the present disclosure, as graphene and multi-walled carbon nanotube are included in the conductive material, dispersion stability of the conductive material slurry is further improved, and at the same time, conductivity between positive electrode active material particles or with the metal current collector is further increased, so that internal resistance of a cell may be significantly lowered.

In some embodiments of the present disclosure, a weight ratio of the graphene and the carbon nanotube (graphene: carbon nanotube) may be 0.5:9.5 to 9.5:0.5, 1:9 to 9:1, or 3:7 to 7:3. According to some embodiments of the present disclosure, as the weight ratio of the graphene and the carbon nanotube (graphene: carbon nanotube) satisfies the numerical range, dispersion stability of the conductive material slurry is further improved, and at the same time, effects in which the internal resistance of the cell is further lowered and a capacity retention is further increased may be implemented.

The graphene according to the present disclosure may include at least any one of multi-layer graphene, graphene oxide, and reduced graphene oxide, and specifically may include reduced graphene oxide. Here, the reduced graphene oxide is a hexagonal two-dimensional planar structure configured to have conductivity by reducing graphene oxide, and may be distinguished from multi-layer graphene and graphene oxide. In some examples, the multi-layer graphene is graphene exfoliated by a physical force, and may mean graphene mainly dispersed in a solvent and exfoliated by shear stress.

In some examples, the graphene may be thin-layered graphene manufactured by various exfoliation methods such as graphene exfoliated through an exfoliation method through physical energy or shear stress, graphene synthesized by an epitaxy method, graphene synthesized by a chemical vapor deposition method, and scotch tape of HOPG graphene.

In some embodiments of the present disclosure, an oxygen content of the graphene may be 10 wt% or less, 9 wt% or less, 8 wt% or less, 7 wt% or less, 6 wt% or less, 5 wt% or less, 3 wt% or less, 2 wt% or less, or 0.5 to 2 wt%. In some embodiments of the present disclosure, as the oxygen content of the graphene satisfies the numerical range, rigidity and ductility of the graphene are controlled, and thus performance of the conductive material may be better exhibited. For example, the oxygen content within the graphene may be analyzed through an elemental analysis (EA) method.

In some embodiments of the present disclosure, a carbon content of the graphene may be 80 wt% or more, 85 wt% or more, 90 wt% or more, or 92 wt% to 98 wt%. In some embodiments of the present disclosure, as the carbon content of the graphene satisfies the numerical range, movement of electrons and ions may be more smoothly performed through sp² bonding of carbon. For example, the carbon content within the graphene may be analyzed through an elemental analyzer (EA) method.

In some embodiments of the present disclosure, purity of the graphene may be 85% or more, 90% or more, or 95% or more. Here, what affects the purity of the graphene may be impurities including metals, ash, and moisture. According to some embodiments of the present disclosure, as the purity of the graphene satisfies the numerical range, stability of the graphene is improved, and at the same time, conductivity may be sufficiently implemented. For example, in the case of metal impurities included in the graphene, they may be analyzed through an inductively coupled plasma (ICP) method, and in the case of non-metallic impurities, they may be analyzed through an elemental analyzer (EA) method.

In some examples, a thickness of the graphene is not particularly limited, but may be 1 to 1,000 nm, 1 to 800 nm, 1 to 500 nm, 1 to 100 nm, 1 to 50 nm, 1 to 10 nm, or 1 to 3 nm. For example, in order to measure the thickness of the graphene, a method of measuring the thickness by coating a graphene dispersion in which the graphene is dispersed on a silicon wafer and then scraping it off with an atomic force microscope (AFM) tip may be used.

In some examples, a manufacturing method of the graphene is not particularly limited, and may be an exfoliation method based on physical shear stress, a physical exfoliation method additionally using a surfactant or a dispersant, an electrical exfoliation method using an electrode, or an oxidative exfoliation method using an oxidizing agent.

In some examples, a shape of the graphene is not particularly limited, and may be any one selected from the group consisting of single-layer graphene, multi-layer graphene, and combinations thereof.

The carbon nanotube according to the present disclosure is a structure distinguished from graphene, and has a large specific surface area, high electrical conductivity, and light characteristics, and thus may further improve conductivity of the conductive material slurry.

The carbon nanotube according to the present disclosure may include at least one of single-walled carbon nanotube and multi-walled carbon nanotube, and specifically may include multi-walled carbon nanotube.

In some examples, a length of the carbon nanotube is not particularly limited, but may be 10 to 20,000 nm, 10 to 2,000 nm, 10 to 1,000 nm, or 10 to 500 nm. Here, the length of the carbon nanotube may be a length of a long axis passing through a center of the carbon nanotube. For example, the length of the carbon nanotube may be measured by any one method selected from the group consisting of a transmission electron microscope, a Raman microscope spectrometer, and combinations thereof.

In some examples, a diameter of the carbon nanotube is not particularly limited, but may be 1 to 200 nm, 2 to 200 nm, 5 to 200 nm, or 50 to 200 nm. Here, the diameter of the carbon nanotube may mean a diameter of a hollow tube shape. When the carbon nanotube is multi-walled, the corresponding diameter may be measured based on an outermost wall of the carbon nanotube. For example, the diameter of the carbon nanotube may be measured by any one method selected from the group consisting of a transmission electron microscope, a Raman microscope spectrometer, and combinations thereof.

In some embodiments of the present disclosure, a content of the conductive material may be 1 to 6 wt%, 2 to 6 wt%, 3 to 6 wt%, 3 to 5 wt%, or 3 to 4 wt% based on a total weight of the conductive material slurry. In some embodiments of the present disclosure, when the content of the conductive material satisfies the numerical range, a phenomenon in which the conductive material is excessively aggregated in the conductive material slurry may be prevented, and at the same time, conductivity between positive electrode active material particles or with the metal current collector may be increased, and it may effectively minimize the binder from acting as an insulator.

### Dispersant

The dispersant according to the present disclosure may improve dispersion stability of a conductive material slurry by effectively preventing the conductive material from being excessively aggregated within the conductive material slurry. Accordingly, by manufacturing an electrode slurry with the conductive material slurry having excellent dispersion stability, a secondary battery having low internal resistance of a cell and excellent cycle stability may be implemented.

The dispersant according to the present disclosure includes a first dispersant including a polymer having a heteroatom. Specifically, as the first dispersant includes the polymer having the heteroatom, it may perform a part of a role of a hydrogen bond acceptor. Here, because the hydrogen bond acceptor of the first dispersant has a polar property, the dispersibility of the conductive material slurry may be further improved through interaction with a polar group within a molecule of a solvent included in the conductive material slurry.

In some embodiments of the present disclosure, the heteroatom of the first dispersant may include at least one of a nitrogen atom, an oxygen atom, a sulfur atom, and a fluorine atom. According to some embodiments of the present disclosure, as the heteroatom includes at least one of the nitrogen atom, the oxygen atom, the sulfur atom, and the fluorine atom, the dispersibility of the conductive material slurry may be further improved through interaction with the polar group within the molecule of the solvent.

In some embodiments of the present disclosure, a weight average molecular weight (M_{w}) of the first dispersant may be 4,000 to 600,000 g/mol, and specifically may be 5,000 to 500,000 g/mol. Specifically, when the weight average molecular weight of the first dispersant satisfies the numerical range, the dispersant is dissolved in the solvent to further improve the dispersion stability of the conductive material slurry, and at the same time, may lower the internal resistance of the cell and increase a capacity retention of the secondary battery.

In some examples, the first dispersant is not particularly limited, and specifically may include at least one selected from the group consisting of nitrile butadiene rubber, poly(ethylene oxide), poly(propylene oxide), poly(vinyl acetate), poly(butylene terephthalate), poly(ethylene naphthalate), polyvinylidene fluoride, polyetherimide, polyaryleneethernitrile, polyaryleneethersulfone, polyetheretherketone, polysulfone, polytetrafluoroethylene, poly(phenylene sulfide), poly(pentafluorostyrene), poly(phenylene oxide), polyacrylonitrile, poly(vinyl fluoride), polychlorotrifluoroethylene, polyimide, polycarbonate, poly(vinyl sulfone), poly(ethersulfone), poly(vinyl nitrile), polyacrylate, polymethacrylate, poly(vinyl acetate), polycaprolactone, cellulose triacetate, and polyvinylpyrrolidone, and specifically may include any one or more of nitrile butadiene rubber, polyvinylidene fluoride, and polyetherimide.

The dispersant according to the present disclosure includes a second dispersant different from the first dispersant. Here, the second dispersant includes a polymer having a group which is capable of hydrogen bonding.

In this specification, "group which is capable of hydrogen bonding" may mean a functional group capable of forming a hydrogen bond with a group within another molecule different from the second dispersant. Specifically, the group which is capable of hydrogen bonding may be analyzed through a combination of various chemical analysis methods such as ¹H-NMR, ¹³C-NMR, or FT-IR.

The second dispersant according to the present disclosure may form a hydrogen bond with the hydrogen bond acceptor of the first dispersant and the hydrogen bond acceptor of the solvent within the conductive material slurry by including the group which is capable of hydrogen bonding, and may promote interaction (e.g., van der Waals attraction) with the conductive material by including a non-polar site as a main skeleton structure within a molecule. In addition, the second dispersant may also form hydrogen bonding with the conductive material. Accordingly, by minimizing the aggregation of the conductive material within the conductive material slurry, the dispersion stability of the conductive material slurry may be further improved. As a result, as the first and second dispersants according to the present disclosure are combined, the conductive material may be evenly disposed on a surface of positive electrode active material particles, and the conductivity of a positive electrode is further improved, so that the internal resistance of the cell is significantly lowered and at the same time, a high capacity retention at a high rate may be exhibited.

In some examples, the group which is capable of hydrogen bonding of the second dispersant is not particularly limited and may be a functional group capable of forming a hydrogen bond with another molecule, and specifically may include at least one of a hydroxy group, a carboxyl group, a hydroperoxy group, a hemiacetal group, a hemiketal group, an oxime group, a phosphono group, a phosphate group, a carboxamide group, an amine group, a primary ketimine group, a primary aldimine group, a ketone group, a carbonate ester group, a carboalkoxy group, a methoxy group, a peroxy group, an ether group, an acetal group, a ketal group, an ortho-ester group, a methylenedioxy group, an ortho carbonate ester group, a cyanic acid salt group, a nitrate salt group, a nitro-oxy group, a sulfo group, a thiono ester group, a boronate group, a borinate group, a quaternary ammonium ion group, a secondary ketimine group, a secondary aldimine group, an imide group, an azide group, an azo group, an isocyanic acid salt group, an isonitrile group, a nitro group, a nitroso group, a carbam acid salt group, and an isothiocyanate group.

In some examples, when the second dispersant includes a main skeleton structure and one or more side chain groups bonded to the main skeleton structure, the group which is capable of hydrogen bonding may be included in at least one among some side chain groups.

In some embodiments of the present disclosure, the weight average molecular weight (M_{w}) of the second dispersant may be 5,000 to 500,000 g/mol, 5,000 to 450,000 g/mol, more than 5,000 g/mol and less than 450,000 g/mol, or 10,000 to 350,000 g/mol. Specifically, when the weight average molecular weight of the second dispersant satisfies the numerical range, the dispersion stability of the conductive material slurry is excellent, the internal resistance of the cell becomes further lowered, and the capacity retention of the secondary battery may be further increased.

In some examples, the second dispersant is not particularly limited, but specifically may include at least one selected from the group consisting of cellulose, ethyl cellulose, poly(vinyl alcohol), poly(acrylic acid), poly(methacrylic acid), cellulose acetate, cellulose nitrate, chitosan, cellulose propionate, cellulose acetate propionate, cellulose acetate butyrate, methyl cellulose, ethyl methyl cellulose, hydroxyethyl cellulose, hydroxypropyl cellulose, hydroxyethylmethyl cellulose, hydroxypropylmethyl cellulose, ethyl hydroxyethyl cellulose, polyhydroxyethylmethacrylate, polyethyleneimine, alginate, polyhydroxyethylacrylate, starch, hyaluronic acid, pullulan, pectin, polyglycerol, lignin, xylan, galactomannan, and polyhydroxystyrene.

In some embodiments of the present disclosure, when the second dispersant is ethyl cellulose, a degree of substitution of the ethyl cellulose may be 40 to 60%, 45 to 55%. Here, the degree of substitution may mean a ratio in which R is substituted with an ethyl group with respect to total -OR groups (where R is a hydrogen atom or an ethyl group) in a side chain in an ethyl cellulose polymer chain. For example, the degree of substitution of the ethyl cellulose may be analyzed by a gas chromatography analysis method. According to some embodiments of the present disclosure, as the degree of substitution of the ethyl cellulose satisfies the numerical range, the hydroxy group bonded to the side chain of the ethyl cellulose performs a role as a hydrogen bond donor, and thus may form a hydrogen bond with the hydrogen bond acceptor of the first dispersant and the hydrogen bond acceptor of the solvent. Also, as the ethyl cellulose includes a carbon ring, which is a non-polar site, as the main skeleton structure within the molecule, it may promote interaction (e.g., van der Waals attraction) with the conductive material. Accordingly, by minimizing the aggregation of the conductive material within the conductive material slurry, the dispersion stability of the conductive material slurry may be further improved.

A content of the dispersant according to the present disclosure may be 0.1 to 1.0 wt%, 0.2 to 0.9 wt%, 0.3 to 0.8 wt%, 0.4 to 0.7 wt%, or 0.5 to 0.6 wt% based on a total weight of the conductive material slurry. Specifically, when the content of the dispersant satisfies the numerical range, the aggregation phenomenon of the conductive material within the conductive material slurry is minimized, and thus the dispersion stability of the conductive material slurry is further improved, and at the same time, electrochemical performance of the cell may be more improved.

In some embodiments of the present disclosure, a weight ratio of the first dispersant and the second dispersant (first dispersant: second dispersant) may be 1:0.05 to 1:4, 1:0.4 to 1:2.3, or 1:0.43 to 1:1. According to some embodiments of the present disclosure, when the weight ratio of the first and second dispersants satisfies the numerical range, the dispersion stability of the conductive material slurry is further improved, the internal resistance of the cell becomes further lowered, and the capacity retention of the secondary battery may be further increased.

In some embodiments of the present disclosure, with respect to 100 parts by weight of the conductive material, the content of the first dispersant may be 2.2 to 200 parts by weight, 5 to 100 parts by weight, 7 to 50 parts by weight, 10 to 30 parts by weight, or 12 to 20 parts by weight.

In some embodiments of the present disclosure, with respect to 100 parts by weight of the conductive material, the content of the second dispersant may be 1 to 90 parts by weight, 2 to 50 parts by weight, 3 to 40 parts by weight, 3 to 30 parts by weight, 3 to 10 parts by weight, or 3 to 7 parts by weight.

According to some embodiments of the present disclosure, when the contents of the first and second dispersants with respect to the conductive material satisfy the numerical range, the dispersion stability of the conductive material slurry is further improved, the internal resistance of the cell becomes further lowered, and the capacity retention of the secondary battery may be further increased.

### Solvent

The solvent according to the present disclosure is included in the conductive material slurry and may dissolve the dispersant.

In this specification, a polar aprotic solvent may have a dielectric constant of 5 or more, 6 or more, 7 or more, 8 or more, 9 or more, 10 or more, 11 or more, 12 or more, 13 or more, 15 or more, 20 or more, 25 or more, or 30 or more at 25°C, and may have a pKa of -2 or more, -1 or more, 0 or more, 1 or more, 5 or more, 10 or more, 15 or more, 20 or more, 25 or more, or 30 or more at 25°C.

As an example, the polar aprotic solvent may be a solvent having a dielectric constant of 5 or more and 40 or less at 25°C, and a refractive index (nD20) of 1.35 or more and 1.5 or less.

The solvent according to the present disclosure may include a polar aprotic solvent that fails to provide a hydrogen cation when dissolved in water. In some examples, the polar aprotic solvent is not particularly limited, but specifically may include at least one of N-methyl-2-pyrrolidone, N,N-dimethylformamide, and N,N'-dimethylacetamide.

In some examples, the polar aprotic solvent may include both a polar group capable of performing a role of a hydrogen bond acceptor within a molecule and a non-polar site within a molecule. According to some embodiments of the present disclosure, when the first and second dispersants are used as the dispersant, affinity between the dispersant and the polar aprotic solvent is further improved, and thus the dispersion stability of the conductive material slurry may be more improved.

In some examples, a content of the solvent is not particularly limited and may be a remaining content excluding the compositions described above.

### Physical properties of conductive material slurry

In some embodiments of the present disclosure, based on a total solid content of the conductive material slurry, a carbon content may be 82 wt% or more, 83 wt% or more, 84 wt% or more, 85 wt% or more, 86 wt% or more, 87 wt% or more, 88 wt% or more, 89 wt% or more, or 90 wt% or more. Here, the carbon content based on the total solid content of the conductive material slurry may be analyzed using an elemental analyzer (EA). According to some embodiments of the present disclosure, when the carbon content based on the total solid content of the conductive material slurry satisfies the numerical range, internal resistance of a cell becomes further lowered and a capacity retention of a secondary battery may be improved.

In some embodiments of the present disclosure, a viscosity of the conductive material slurry may be 100 to 2,000 cps at 23°C and a shear rate of 50 s⁻¹.

In some embodiments of the present disclosure, a dispersion stability index of the conductive material slurry may be 0.72 or less, 0.65 or less, 0.60 or less, 0.50 or less, 0.45 or less, 0.42 or less, 0.41 or less, 0.40 or less, 0.39 or less, 0.31 or less, 0.30 or less, or 0.29 or less. For example, the dispersion stability index may be calculated by performing high-speed centrifugation/separation for 60 minutes by applying a centrifugal force of 2,100 to 2,200 G to the conductive material slurry at 25°C using a dispersion stability analyzer (Lumisizer), and then measuring a near-infrared transmittance profile for the conductive material slurry (refer to Equation 1 below).

### 2. Positive electrode

According to another aspect of the present disclosure, a positive electrode including a conductive material; a dispersant; a positive electrode active material; and a binder is provided, wherein the dispersant includes a first dispersant and a second dispersant different from the first dispersant, the first dispersant includes a polymer having a heteroatom, and the second dispersant includes a polymer having a group which is capable of hydrogen bonding. The descriptions repeated with the above-described part will be briefly described or omitted.

Specifically, the dispersant further includes a second dispersant different from the first dispersant, and the second dispersant may include a polymer having a group which is capable of hydrogen bonding.

The positive electrode according to the present disclosure may include a positive electrode current collector and a positive electrode active material layer disposed on at least one surface of the positive electrode current collector.

For example, the positive electrode current collector is not particularly limited as long as it has high conductivity without causing a chemical change in a battery. Specifically, as the positive electrode current collector, copper, stainless steel, aluminum, nickel, titanium, calcined carbon, those surface-treated with carbon, nickel, titanium, silver, etc. on a surface of copper or stainless steel, an aluminum-cadmium alloy, and the like may be used. The positive electrode current collector may typically have a thickness of 6 to 20 µm.

For example, the positive electrode active material may include a lithium transition metal oxide. The lithium transition metal oxide may include at least one selected from the group consisting of Liₓ₁CoO₂(0.5<x1<1.3), Liₓ₂NiO₂(0.5<x2<1.3), Liₓ₃MnO₂(0.5<x3<1.3), Liₓ₄Mn₂O₄(0.5<x4<1.3), Liₓ₅(Niₐ₁Co_{b1}Mn_{c1})O₂(0.5<x5<1.3, 0<a1<1, 0<b1<1, 0<c1<1, a1+b1+c1=1), Liₓ₆Ni_{1-y1}Co_{y1}O₂(0.5<x6<1.3, 0<y1<1), Liₓ₇Co_{1-y2}Mn_{y2}O₂(0.5<x7<1.3, 0≤y2<1), Liₓ₈Ni_{1-y3}Mn_{y3}O₂(0.5<x8<1.3, 0≤y3<1), Liₓ₉(Niₐ₂Co_{b2}Mn_{c2})O₄(0.5<x9<1.3, 0<a2<2, 0<b2<2, 0<c2<2, a2+b2+c2=2), Liₓ₁₀Mn_{2-z1}Ni_{z1}O₄(0.5<x10<1.3, 0<z1<2), Liₓ₁₁Mn_{2-z2}Co_{z2}O₄(0.5<x11<1.3, 0<z2<2), Liₓ₁₂CoPO₄(0.5<x12<1.3), Liₓ₁₃FePO₄(0.5<x13<1.3), Li_{A1}Ni_{B1}Co_{C1}Mn_{D1}Al_{E1}O₂(A1=0.5 or more and 1.3 or less, B1+C1+D1+E1=1, 0<B1<1, 0<C1<1, 0<D1<1, 0<E1<1), Li_{A2}Ni_{B2}Co_{C2}Al_{D2}O₂(A2=0.5 or more and 1.3 or less, B2+C2+D2=1, 0<B2<1, 0<C2<1, 0<D2<1), and Li_{A3}Mn_{B3}Fe_{C3}PO₄(0.5<A3<1.3, B3+C3=1, 0<B3<1, 0<C3<1).

For example, the binder used for the positive electrode may be poly(vinylidene fluoride-co-hexafluoropropylene), poly(vinylidene fluoride-co-trichloroethylene), poly(methylmethacrylate), poly(ethylhexylacrylate), poly(butylacrylate), poly(acrylonitrile), poly(vinylpyrrolidone), poly(vinyl acetate), poly(ethylene-co-vinyl acetate), poly(ethylene oxide), polyacrylate, cellulose acetate, cellulose acetate butyrate, cellulose acetate propionate, cyano ethyl pullulan, cyano ethyl poly(vinylalcohol), cyanoethylcellulose, cyano ethylsucrose, pullulan, and carboxyl methyl cellulose, etc., but is not limited thereto.

### 3. Secondary battery

According to another aspect of the present disclosure, a secondary battery including the positive electrode of some embodiments; a negative electrode; a separator interposed between the positive electrode and the negative electrode; and an electrolyte solution is provided.

### Negative electrode

A manufacturing method of a negative electrode according to the present disclosure may include a step of preparing a negative electrode slurry including a negative electrode active material, a conductive material, and a negative electrode binder; a step of forming a negative electrode active material layer by coating and drying the negative electrode slurry on at least one surface of a negative electrode current collector; and a step of rolling the current collector on which the negative electrode active material layer is formed.

The negative electrode current collector may perform a role of a path for delivering electrons from the outside so that an electrochemical reaction occurs in the negative electrode active material, or receiving electrons from the negative electrode active material and sending them to the outside. For example, as the negative electrode current collector, copper, stainless steel, aluminum, nickel, titanium, calcined carbon, or those surface-treated with carbon, nickel, titanium, silver, etc. on a surface of aluminum or stainless steel may be used, and specifically, a transition metal that adsorbs carbon well, such as copper and nickel, may be used as the current collector. For example, a thickness of the negative electrode current collector may be 6 µm to 55 µm, but the thickness of the negative electrode current collector is not limited thereto.

In some embodiments of the present disclosure, the negative electrode slurry may further include any one or more of a silicon-based negative electrode active material and a graphite-based active material. For example, the silicon-based negative electrode active material may include at least one selected from the group consisting of Si, SiOx(0<x≤2), a Si-C composite, and a Si-Y alloy (where Y is any one element selected from the group consisting of alkali metals, alkaline earth metals, transition metals, Group 13 elements, Group 14 elements, and rare earth elements). For example, the graphite-based active material may include at least one selected from the group consisting of artificial graphite, natural graphite, graphitized carbon fiber, and graphitized mesocarbon microbeads.

The negative electrode binder may suppress separation between negative electrode active material (silicon negative electrode active material) particles, or between the negative electrode and the current collector. As the negative electrode binder, a polymer commonly used for electrodes in the corresponding technical field may be used. Such a negative electrode binder may be, without limitation, the same as or different from the positive electrode binder.

### Separator

The separator according to the present disclosure is configured with a porous substrate, or may include a porous substrate and a coating layer.

The porous substrate according to the present disclosure is capable of providing a migration path of lithium ions while preventing a short circuit by electrically insulating the negative electrode and the positive electrode, and may be a porous structure having high resistance to an electrolyte solution and a fine diameter of pores.

An organic material or an inorganic material having electrical insulation may be used as a constituent material of the porous substrate without being particularly limited. The porous substrate may include, for example, at least any one selected from the group consisting of polyolefin, polyethylene terephthalate, polybutylene terephthalate, polyacetal, polyamide, polycarbonate, polyimide, polyetheretherketone, polyethersulfone, polyphenylene oxide, polyphenylene sulfide, and polyethylene naphthalene, and specifically may include polyolefin. Polyolefin not only has excellent applicability but also may increase capacity per volume by increasing a ratio of the electrode active material layer within the battery by making the thickness of the separator thin.

Specifically, a weight average molecular weight (M_{w}) of the polyolefin may be 100,000 to 500,000 g/mol. When the weight average molecular weight of the polyolefin is less than the numerical range, it may be difficult to secure sufficient mechanical physical properties, and when it exceeds the numerical range, a shut-down function may not be implemented or molding may be difficult. The shut-down function means a function of blocking migration of ions and preventing thermal runaway of the battery by closing pores of the porous substrate as a thermoplastic resin dissolves when a temperature of the secondary battery increases.

The thickness of the porous substrate may be, for example, 3 to 50 µm or 4 to 30 µm. When the thickness of the porous substrate is less than the numerical range, a function of a conductive barrier may not be sufficient, and when it exceeds the numerical range, resistance of the separator may excessively increase.

An average diameter of pores included in the porous substrate may be, for example, 10 to 100 nm. The pores included in the porous substrate have a structure in which they are connected to each other, and thus gas or liquid may pass through from one surface to the other surface of the porous substrate.

A separator according to another embodiment of the present disclosure may improve mechanical strength and heat resistance of a separator for a secondary battery, and may include a coating layer disposed on at least one surface of the porous substrate to increase ion conductivity within the secondary battery.

The coating layer according to the present disclosure may include a binder polymer and inorganic particles.

The binder polymer according to the present disclosure connects between the inorganic particles and may stably fix them. The binder polymer may be, for example, one type or a mixture of two or more types selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinyl acetate, poly(ethylene-co-vinyl acetate), polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, acrylonitrile-styrene butadiene copolymer, polyimide, and styrene-butadiene rubber.

According to another embodiment of the present disclosure, a weight ratio of the inorganic particles and the binder polymer (inorganic particles: binder polymer) may be 50:50 to 99:1, and specifically may be 70:30 to 95:5. When a content ratio of the inorganic particles to the binder polymer is less than the numerical range, a content of the binder polymer increases, and thus performance of improving thermal stability of the separator may be degraded, and pore size and porosity may be decreased due to a reduction in empty spaces formed between the inorganic particles, which may cause performance degradation of a final battery, and when it exceeds the numerical range, the content of the binder polymer is too small, and thus peeling resistance of the coating layer may be weakened.

The inorganic particles according to the present disclosure may contribute to improving mechanical strength and heat resistance of the separator for a secondary battery. Specifically, the inorganic particles are not particularly limited as long as they are electrochemically stable. That is, the inorganic particles usable in the present disclosure are not particularly limited as long as an oxidation and/or reduction reaction does not occur in an operating voltage range (e.g., 0 to 5 V based on Li/Li⁺) of the secondary battery to be applied. As an example, when inorganic particles having a high dielectric constant are used as the inorganic particles, it may contribute to an increase in a dissociation degree of an electrolyte salt, for example, a lithium salt, in a liquid electrolyte, thereby improving ion conductivity of the electrolyte solution.

For the above-mentioned reasons, the inorganic particles may be inorganic particles having a dielectric constant of 5 or more, inorganic particles having lithium ion delivery capability, or a mixture thereof.

The inorganic particles having the dielectric constant of 5 or more may be one type or a mixture of two or more types selected from the group consisting of Al₂O₃, SiO₂, ZrO₂, AlO(OH), Al(OH)₃, Mg(OH)₂, BaSO₄, TiO₂, BaTiO₃, Pb(ZrₓTi₁₋ₓ)O₃(PZT, where 0 <x<1), Pb₁₋ₓLaₓZr_{1-y}Ti_{y}O₃ (PLZT, where 0 < x < 1, 0 < y < 1), (1-x)Pb(Mg_{1/3}Nb_{2/3})O₃₋ₓPbTiO₃ (PMN-PT, where 0 < x < 1), HfO₂, SrTiO₃, SnO₂, CeO₂, MgO, NiO, CaO, ZnO, and SiC.

The inorganic particles having the lithium ion delivery capability may be one type or a mixture of two or more types selected from the group consisting of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} series glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂ series glass (LiₓSi_{y}S_{z}, 0<x<3, 0<y<2, 0<z<4), and P₂S₅ series glass (LiₓP_{y}S_{z}, 0<x<3, 0<y<3, 0<z<7).

For example, an average particle diameter (D₅₀) of the inorganic particles may be 1 nm to 10 µm for formation of a coating layer having a uniform thickness and appropriate porosity, specifically may be 10 nm to 2 µm, and more specifically may be 50 nm to 1 µm. The "average particle diameter (D₅₀)" means a particle diameter at a 50% point of a cumulative distribution of a number of particles according to the particle diameter. The average particle diameter may be measured using a laser diffraction method. Specifically, after dispersing powder to be measured in a dispersion medium, it is introduced into a commercially available laser diffraction particle size measuring apparatus (e.g., Microtrac S3500), and thus a particle size distribution may be calculated by measuring a difference in diffraction patterns according to particle sizes when the particles pass through a laser beam.

Specifically, the thickness of the coating layer may be 0.1 to 10 µm, specifically 1 to 3 µm, and more specifically 1.4 to 1.6 µm. When the thickness of the coating layer satisfies the numerical range, insulation and thermal stability of the separator may be increased, and at the same time, energy density of the battery may be improved.

### Electrolyte solution

The electrolyte solution according to the present disclosure may include a solvent and a lithium salt.

The solvent according to the present disclosure may be, for example, one type or a mixture of two or more types selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (GBL), fluoroethylene carbonate (FEC), methyl formate, ethyl formate, propyl formate, methyl acetate, ethyl acetate, propyl acetate, pentyl acetate, methyl propionate, ethyl propionate, ethyl propionate, and butyl propionate.

The lithium salt according to the present disclosure may include, for example, an anion such as NO₃⁻, F⁻, Cl⁻, Br⁻, I⁻, or PF₆⁻.

### Performance

In some embodiments of the present disclosure, based on a half-cell sample including the above-described positive electrode and lithium metal (Li metal) as a negative electrode, an internal resistance of a cell measured based on a cell internal resistance analysis method (direct current internal resistance (DCIR)) may be about 27 Ω or less, about 24 Ω or less, about 15 Ω or less, about 11 Ω or less, about 10 Ω or less, about 9 Ω or less, about 8 Ω or less, about 7 Ω or less, about 6 Ω or less, about 5 Ω or less, or about 4.9 Ω or less, and specifically, may be more than 0 Ω and any one or less among the plurality of upper limits.

In some embodiments of the present disclosure, based on the half-cell sample including the above-described positive electrode and lithium metal as the negative electrode, charge/discharge is performed 50 times at a C-rate of 1C, and a capacity retention may be about 71% or more, about 80% or more, about 85% or more, about 90% or more, about 91% or more, about 92% or more, about 93% or more, about 94% or more, about 95% or more, about 96% or more, or about 97% or more, and may be any one or more among the plurality of lower limits and 100% or less.

### Application

The secondary battery according to the present disclosure may be a cylindrical, prismatic, or pouch-type secondary battery, but is not particularly limited as long as it corresponds to a charge/discharge device.

Another embodiment of the present disclosure may provide a battery module including the secondary battery as a unit cell and a battery pack including the same. The battery pack may be used as a power source for one or more types of medium-to-large-sized devices selected from the group consisting of, for example, a power tool; an electric vehicle including an electric vehicle (EV), a hybrid electric vehicle (HEV), and a plug-in hybrid electric vehicle (PHEV); or a system for power storage.

Hereinafter, embodiments of the present disclosure will be described in detail so that those skilled in the art to which the present disclosure pertains can easily carry them out, but this is only one example, and the scope of rights of the present disclosure is not limited by the following details.

### [Manufacturing Example 1: Manufacturing of conductive material slurry]

### <Examples 1 to 11: Manufacturing of conductive material slurry including first and second dispersants>

### Step of preparing a first dispersant solution by dissolving a first dispersant in a solvent:

950 g of NMP (N-methyl-2-pyrrolidone) and 50 g of nitrile-butadiene rubber (NBR), which is a first dispersant, were added to a round-bottom flask, and then stirred at 70°C for 5 hours to prepare a 5 wt% first dispersant solution.

### Step of preparing a second dispersant solution by dissolving a second dispersant in a solvent:

950 g of NMP (N-methyl-2-pyrrolidone) and 50 g of ethyl cellulose (EC), which is a second dispersant, were added to a round-bottom flask, and then stirred at 70°C for 5 hours to prepare a 5 wt% second dispersant solution.

### Step of stirring a conductive material and the first and second dispersant solutions:

After mixing a conductive material and the first and second dispersant solutions to have the compositions and contents thereof described in Table 1 below, a preliminary conductive material slurry was manufactured by stirring at 1,000 to 2,000 rpm for 60 minutes using Dispermat (LC 55-E) equipment.

### Step of manufacturing a conductive material slurry by dispersing the preliminary conductive material slurry at high pressure:

A conductive material slurry was manufactured by performing 8-pass high-pressure dispersion of the preliminary conductive material slurry at 2,000 bar using a high-pressure disperser (MN400BF, Micronox).

### <Comparative Examples 1 to 4: Manufacturing of conductive material slurry including only any one of first dispersant and second dispersant>

A conductive material slurry having the content described in Table 1 below was manufactured in the same manner as in Example 1, except that only any one of the first and second dispersants was used.

**[Table 1]**

| Classification | Graphene (wt%) | CNT¹ ) (wt%) | Carbon black (wt%) | First dispersant (NBR) (wt%)²⁾ | Second dispersant (EC) (wt%)³⁾ | Carbon content⁴⁾ | Graphene (FWHM )⁵⁾ | Graphene oxygen content (%) |
|---|---|---|---|---|---|---|---|---|
| Comparative Example 1 | 0 | 1.5 | 1.5 | 0.6 | 0 | | | |
| Comparative Example 2 | 0 | 3 | 0 | 0.6 | 0 | | | |
| Comparative Example 3 | 3 | 0 | 0 | 0.6 | 0 | 89.5% | 11 | 2% |
| Comparative Example 4 | 3 | 0 | 0 | 0 | 0.6 | 86.8% | 11 | 2% |
| Example 1 | 3 | 0 | 0 | 0.57 | 0.03 | 90.0% | 11 | 2% |
| Example 2 | 3 | 0 | 0 | 0.42 | 0.18 | 90.1% | 11 | 2% |
| Example 3 | 3 | 0 | 0 | 0.3 | 0.3 | 89.9% | 11 | 2% |
| Example 4 | 3 | 0 | 0 | 0.18 | 0.42 | 86.0% | 11 | 2% |
| Example 5 | 3 | 0 | 0 | 0.12 | 0.48 | 87.2% | 11 | 2% |
| Example 6 | 3 | 0 | 0 | 0.42 | 0.18 | - | - | 10% |
| Example 7 | 3 | 0 | 0 | 0.42 | 0.18 | | | 11% |
| Example 8 | 3 | 0 | 0 | 0.42 | 0.18 | | 0.2 | |
| Example 9 | 3 | 0 | 0 | 0.42 | 0.18 | | 0.3 | |
| Example 10 | 3 | 0 | 0 | 0.42 | 0.18 | | 95 | |
| Example 11 | 3 | 0 | 0 | 0.42 | 0.18 | | 99 | |
| 1) Multi-walled carbon nanotube having an aspect ratio of 15,000 and a BET specific surface area of 200 m²/g | | | | | | | | |
| 2) NBR: nitrile-butadiene rubber having a nitrile content of 60 wt% and a weight average molecular weight of 120,000 g/mol | | | | | | | | |
| 3) EC: ethyl cellulose having a degree of substitution (content of ethoxy group) of 47.5 to 49.5% and a weight average molecular weight of 70,000 g/mol | | | | | | | | |
| 4) Carbon content with respect to a total solid content of the conductive material slurry (wt%): analyzed using an elemental analyzer (EA) | | | | | | | | |
| 5) Full width at half maximum in the (002) crystal plane of graphene: analyzed by an XRD analysis method | | | | | | | | |
| 6) Oxygen content of graphene (wt%): analyzed using an elemental analyzer (EA) | | | | | | | | |

### [Experimental Example 1: Evaluation of dispersion stability of conductive material slurry and electrochemical performance of half-cell]

### Measurement of dispersion stability index of conductive material slurry

High-speed centrifugation/separation was performed for 60 minutes by applying a centrifugal force of 2,100 to 2,200 G to the conductive material slurry at 25°C using a dispersion stability analyzer (Lumisizer), and then a near-infrared transmittance profile for the conductive material slurry was measured. Then, a dispersion stability index was calculated using Equation 1 below. As the dispersion stability index is lower, it means that dispersion stability of the conductive material slurry is excellent. $Dispersion stability index = \left[\left({A}_{n}-{A}_{f}\right)/\left({A}_{l}-{A}_{f}\right)\right]$

In the Equation 1, Aₙ is an n-th area in the transmittance profile, A_{f} is an area of an initial profile in the transmittance profile, and Aₗ is an area of a last profile in the transmittance profile. Here, n is an arbitrary value, the initial profile means a first profile when 5 seconds have elapsed, and the last profile means a 720th profile when 60 minutes have elapsed.

### Evaluation of electrochemical performance of half-cell

### Manufacturing a half-cell sample:

A positive electrode slurry having a total solid content of 70 wt% was manufactured by mixing the conductive material slurry manufactured by the method according to the Manufacturing Example 1, a positive electrode active material (NCM), and an electrode binder (polyvinylidene fluoride, PVDF) in a weight ratio of 2:95:3, and then adding them to a solvent (N-methyl-2-pyrrolidone, NMP). A positive electrode was manufactured by coating the positive electrode slurry on a positive electrode current collector (aluminum) having a thickness of 10 µm and then drying it at 90°C for 30 minutes. Lithium metal (Li metal) was used as a negative electrode, a separator made of a polyethylene material (thickness: 80 µm) was used as a separator, and an electrolyte solution (1.3 mol LiPF₆, EC:EMC=3:7 (v/v) 95 vol% + FEC 5 vol%) was injected to manufacture a coin-type half-cell.

### Evaluation method:

Internal resistance of the half-cell was measured using a cell internal resistance analysis method (direct current internal resistance (DCIR)), and charge/discharge was performed 50 times at a C-rate of 1C, and then a capacity retention was measured and shown in Table 2 below.

**[Table 2]**

| Classification | Dispersion stability index (Stability index) | Cell internal resistance (DCIR, Ω) | 50-cycle capacity retention (%) (1C/1C) |
|---|---|---|---|
| Comparative Example 1 | 0.58 | 12.3 | 88.9 |
| Comparative Example 2 | 0.62 | 10.5 | 90.3 |
| Comparative Example 3 | 0.44 | 8.7 | 92.9 |
| Comparative Example 4 | 0.76 | 9.4 | 91.8 |
| Example 1 | 0.41 | 7.7 | 93.1 |
| Example 2 | 0.41 | 7.7 | 93.2 |
| Example 3 | 0.4 | 7.6 | 93.1 |
| Example 4 | 0.65 | 9.1 | 92.1 |
| Example 5 | 0.72 | 9.3 | 91.9 |
| Example 6 | 0.4 | 7.8 | 93.3 |
| Example 7 | 0.6 | 23.9 | 71.3 |
| Example 8 | 0.5 | 26.7 | 83.6 |
| Example 9 | 0.41 | 7.8 | 93.2 |
| Example 10 | 0.4 | 7.7 | 93.1 |
| Example 11 | 0.41 | 7.9 | 93.3 |

In Table 2, comparing Comparative Examples 1 to 4 and some Examples according to a combination relationship of a first dispersant including a polymer having a heteroatom and a second dispersant including a polymer having a group which is capable of hydrogen bonding, some Examples including a conductive material slurry including both the first and second dispersants exhibited effects in which dispersion stability is excellent, internal resistance of a cell manufactured with the conductive material slurry is low, and capacity retention is relatively high compared to Comparative Examples 1 to 4.

In Table 2, comparing Examples 1 to 5 from the viewpoint of dispersion stability of the conductive material slurry and cell performance according to an optimum weight ratio of the first and second dispersants, Examples 1 to 3 satisfying a weight ratio of the first and second dispersants of 1:2.3 or less exhibited effects in which dispersion stability is further excellent, the internal resistance of the cell is further lower, and the capacity retention is further higher compared to Examples 4 and 5.

Comparing Examples 2, 6, and 7 from the viewpoint of the internal resistance and the capacity retention of the cell according to an oxygen content of graphene, it can be confirmed that as the oxygen content of the graphene satisfies 10% or less, the internal resistance of the cell is lowered and the capacity retention of the half-cell is increased.

### [Manufacturing Example 2: Manufacturing of conductive material slurry with different molecular weights of NBR]

A conductive material slurry including the composition (unit: wt%) and a remaining solvent (N-methyl-2-pyrrolidone, NMP) described in Table 3 below was manufactured by the same method as in Example 1.

**[Table 3]**

| Classification | Graphene (wt%) | CNT (wt%) | Carbon black (wt%) | NBR (wt%) | EC (wt%) | NBR weight average molecular weight (g/mol) |
|---|---|---|---|---|---|---|
| Example 12 | 3 | 0 | 0 | 0.42 | 0.18 | 4,000g/mol |
| Example 13 | 3 | 0 | 0 | 0.42 | 0.18 | 5,000g/mol |
| Example 14 | 3 | 0 | 0 | 0.42 | 0.18 | 500,000g/mol |
| Example 15 | 3 | 0 | 0 | 0.42 | 0.18 | 600,000g/mol |
| Weight average molecular weight of EC: 70,000g/mol | | | | | | |

### [Experimental Example 2: Evaluation of dispersion stability of conductive material slurry and electrochemical performance of half-cell]

The performance was evaluated in the same manner as in Experimental Example 1, and the results are shown in Table 4 below.

**[Table 4]**

| Classification | Weight average molecular weight of NBR | Dispersion stability index (Stability index) | Cell internal resistance (DCIR, Ω) | 50-cycle capacity retention (%) (1C/1C) |
|---|---|---|---|---|
| | (g/mol) | | | |
| Example 12 | 4,000g/mol | 0.5 | 10.6 | 91.3 |
| Example 13 | 5,000g/mol | 0.42 | 7.9 | 93.3 |
| Example 14 | 500,000g/mol | 0.4 | 7.6 | 93 |
| Example 15 | 600,000g/mol | Slurry cannot be manufactured (undissolved) | Cell assembly impossible | Cell assembly impossible |

With reference to Table 4, comparing Examples 12 to 15 from the viewpoint of dispersion stability of the conductive material slurry and cell performance according to the weight average molecular weight of nitrile-butadiene rubber, Examples 13 and 14 satisfying the weight average molecular weight of nitrile-butadiene rubber of more than 4,000 g/mol and less than 600,000 g/mol exhibited effects in which the dispersion stability of the conductive material slurry is excellent, the internal resistance of the cell is low, and the capacity retention is high compared to Examples 12 and 15.

### [Manufacturing Example 3: Manufacturing of conductive material slurry with different molecular weights of EC]

A conductive material slurry including the composition (unit: wt%) and a remaining solvent (N-methyl-2-pyrrolidone, NMP) described in Table 5 below was manufactured by the same method as in Example 1.

**[Table 5]**

| Classification | Graphene (wt%) | CNT (wt%) | Carbon black (wt%) | NBR (wt%) | EC (wt%) | Weight average molecular weight of EC (g/mol) |
|---|---|---|---|---|---|---|
| Example 16 | 3 | 0 | 0 | 0.42 | 0.18 | 5,000g/mol |
| Example 17 | 3 | 0 | 0 | 0.42 | 0.18 | 10,000g/mol |
| Example 18 | 3 | 0 | 0 | 0.42 | 0.18 | 350,000g/mol |
| Example 19 | 3 | 0 | 0 | 0.42 | 0.18 | 450,000g/mol |
| Weight average molecular weight of NBR: 120,000g/mol | | | | | | |

### [Experimental Example 3: Evaluation of dispersion stability of conductive material slurry and electrochemical performance of half-cell]

The performance was evaluated in the same manner as in Experimental Example 1, and the results are shown in Table 6 below.

**[Table 6]**

| Classification | Weight average molecular weight of EC | Dispersion stability index (Stability index) | Cell internal resistance (DCIR, Ω) | 50-cycle capacity retention (%) (1C/1C) |
|---|---|---|---|---|
| | (g/mol) | | | |
| Example 16 | 5,000g/mol | 0.6 | 9.5 | 91 |
| Example 17 | 10,000g/mol | 0.4 | 7.7 | 93.2 |
| Example 18 | 350,000g/mol | 0.39 | 7.6 | 92.9 |
| Example 19 | 450,000g/mol | Slurry cannot be manufactured (undissolved) | Cell assembly impossible | Cell assembly impossible |

In Table 6, Examples 17 and 18 satisfying the weight average molecular weight of ethyl cellulose of more than 5,000 g/mol and less than 450,000 g/mol exhibited effects in which the dispersion stability of the conductive material slurry is excellent, the internal resistance of the cell is low, and the capacity retention is high compared to Examples 16 and 19.

### [Manufacturing Example 4: Manufacturing of conductive material slurry with different molecular weights of EC]

A conductive material slurry including the composition (unit: wt%) and a remaining solvent (N-methyl-2-pyrrolidone, NMP) described in Table 7 below was manufactured by the same method as in Example 1.

Here, a degree of substitution of ethyl cellulose may mean a ratio in which R is substituted with an ethyl group with respect to total -OR groups (where R is a hydrogen atom or an ethyl group) in a side chain of a polymer chain of ethyl cellulose. Here, the degree of substitution of ethyl cellulose may be analyzed by a gas chromatography analysis method.

**[Table 7]**

| Classification | Graphene (wt%) | CNT (wt%) | Carbon black (wt%) | NBR (wt%) | EC (wt%) | Degree of substitution of EC (%) |
|---|---|---|---|---|---|---|
| Example 20 | 3 | 0 | 0 | 0.42 | 0.18 | 40~45% |
| Example 21 | 3 | 0 | 0 | 0.42 | 0.18 | 45~50% |
| Example 22 | 3 | 0 | 0 | 0.42 | 0.18 | 50~55% |
| Example 23 | 3 | 0 | 0 | 0.42 | 0.18 | 55~60% |
| Weight average molecular weight of NBR: 120,000g/mol | | | | | | |
| Weight average molecular weight of EC: 70,000g/mol | | | | | | |

### [Experimental Example 4: Evaluation of dispersion stability of conductive material slurry and electrochemical performance of half-cell]

The performance was evaluated in the same manner as in Experimental Example 1, and the results are shown in Table 8 below.

**[Table 8]**

| Classification | Degree of substitution of EC (%) | Dispersion stability index (Stability index) | Cell internal resistance (DCIR, Ω) | 50-cycle capacity retention (%) (1C/1C) |
|---|---|---|---|---|
| Example 20 | 40~45% | 0.41 | 7.7 | 93.2 |
| Example 21 | 45~50% | 0.4 | 7.6 | 93.1 |
| Example 22 | 50~55% | 0.4 | 7.8 | 93.2 |
| Example 23 | 55~60% | 0.41 | 7.7 | 93 |

### [Manufacturing Example 5: Manufacturing of conductive material slurry with different types of dispersants]

A conductive material slurry was manufactured by the same method as in Example 1, except that the dispersant was changed to the composition described in Table 9 below.

**[Table 9]**

| Classification | Graphene (wt%) | CNT (wt%) | Carbon black (wt%) | First dispersant (wt%) | Second dispersant (wt%) |
|---|---|---|---|---|---|
| Example 24 | 3 | 0 | 0 | 0.48 (PVDF) | 0.12 (EC) |
| Example 25 | 3 | 0 | 0 | 0.48 (PEI) | 0.12 (EC) |
| Example 26 | 3 | 0 | 0 | 0.51 (NBR) | 0.09 (PAA) |
| Example 27 | 3 | 0 | 0 | 0.54 (NBR) | 0.06 (PVA) |
| PVDF: polyvinylidene fluoride having a weight average molecular weight of 1,300,000 g/mol | | | | | |
| EC: ethyl cellulose having a weight average molecular weight of 70,000 g/mol | | | | | |
| PEI: polyetherimide with 25,000 g/mol | | | | | |
| NBR: nitrile-butadiene rubber having a weight average molecular weight of 120,000 g/mol | | | | | |
| PVA: poly(vinyl alcohol) having a weight average molecular weight of 31,000 to 50,000 g/mol | | | | | |

### [Experimental Example 5: Evaluation of dispersion stability of conductive material slurry and electrochemical performance of half-cell]

The performance was evaluated in the same manner as in Experimental Example 1, and the results are shown in Table 10 below.

**[Table 10]**

| Classification | Dispersion stability index (Stability index) | Cell internal resistance (DCIR, Ω) | 50-cycle capacity retention (%) (1C/1C) |
|---|---|---|---|
| Example 24 | 0.42 | 7.9 | 93.1 |
| Example 25 | 0.41 | 8 | 93 |
| Example 26 | 0.4 | 7.7 | 93.1 |
| Example 27 | 0.41 | 7.9 | 93.1 |

### [Manufacturing Example 6: Manufacturing of conductive material slurry using two types of conductive materials and two types of dispersants]

A conductive material slurry was manufactured by the same method as in Example 1, except that the composition was as described in Table 11 below.

**[Table 11]**

| Classification | Graphene (wt%) | CNT (wt%) | Carbon black (wt%) | NBR (wt%) | EC (wt%) |
|---|---|---|---|---|---|
| Example 28 | 2.85 | 0.15 | 0 | 0.42 | 0.18 |
| Example 29 | 2.7 | 0.3 | 0 | 0.42 | 0.18 |
| Example 30 | 2.1 | 0.9 | 0 | 0.42 | 0.18 |
| Example 31 | 1.5 | 1.5 | 0 | 0.42 | 0.18 |
| Example 32 | 0.9 | 2.1 | 0 | 0.42 | 0.18 |
| Example 33 | 0.3 | 2.7 | 0 | 0.42 | 0.18 |
| Example 34 | 0.15 | 2.85 | 0 | 0.42 | 0.18 |

### [Experimental Example 6: Evaluation of dispersion stability of conductive material slurry and electrochemical performance of half-cell]

The performance was evaluated in the same manner as in Experimental Example 1, and the results are shown in Table 12 below.

**[Table 12]**

| Classification | Weight ratio (graphene:CNT) | Dispersion stability index (Stability index) | Cell internal resistance (DCIR, Ω) | 50-cycle capacity retention (%) (1C/1C) |
|---|---|---|---|---|
| Example 28 | 9.5:0.5 | 0.45 | 9.1 | 94.2 |
| Example 29 | 9:1 | 0.29 | 5.7 | 97.7 |
| Example 30 | 7:3 | 0.3 | 5.2 | 97.6 |
| Example 31 | 5:5 | 0.31 | 5 | 97.6 |
| Example 32 | 3:7 | 0.3 | 4.9 | 97.7 |
| Example 33 | 1:9 | 0.29 | 4.9 | 97.6 |
| Example 34 | 0.5:9.5 | 0.46 | 7.6 | 91.3 |

With reference to Table 12, Examples 29 to 33, in which the weight ratio of graphene and CNT satisfies 9:1 to 1:9, exhibited effects in which the dispersion stability of the conductive material slurry is further excellent, the internal resistance of the cell is further lower, and the capacity retention is further higher compared to Example 28 and Example 34.

Although the preferred embodiments of the present disclosure have been described in detail above, the scope of rights of the present disclosure is not limited thereto, and various modifications and improvements by those skilled in the art using the basic concept of the present disclosure defined in the following claims also fall within the scope of rights of the present disclosure.

## Claims

1. A conductive material slurry, comprising:
a conductive material;
a dispersant; and a solvent,
wherein the dispersant comprises a first dispersant and a second dispersant different from the first dispersant,
the first dispersant comprises a polymer having a heteroatom, and
the second dispersant comprises a polymer having a group which is capable of hydrogen bonding.

2. The conductive material slurry of claim 1, wherein the conductive material has a full width at half maximum (FWHM) of a peak resulting from a (002) crystal plane of 0.3 to 100 based on X-ray diffraction (XRD) analysis.

3. The conductive material slurry of claim 1, wherein the conductive material comprises at least one of graphene and carbon nanotube.

4. The conductive material slurry of claim 3, wherein a weight ratio of the graphene and the carbon nanotube is 1:9 to 9:1.

5. The conductive material slurry of claim 3, wherein an oxygen content of the graphene is 10 wt% or less based on elemental analysis (EA).

6. The conductive material slurry of claim 1, wherein the heteroatom comprises at least one of a nitrogen atom, an oxygen atom, a sulfur atom, and a fluorine atom.

7. The conductive material slurry of claim 1, wherein a weight average molecular weight (M_{w}) of the first dispersant is 5,000 to 500,000 g/mol.

8. The conductive material slurry of claim 1, wherein the first dispersant comprises at least one selected from the group consisting of nitrile butadiene rubber, poly(ethylene oxide), poly(propylene oxide), poly(vinyl acetate), poly(butylene terephthalate), poly(ethylene naphthalate), polyvinylidene fluoride, polyetherimide, polyaryleneethernitrile, polyaryleneethersulfone, polyetheretherketone, polysulfone, polytetrafluoroethylene, poly(phenylene sulfide), poly(pentafluorostyrene), poly(phenylene oxide), polyacrylonitrile, poly(vinyl fluoride), polychlorotrifluoroethylene, polyimide, polycarbonate, poly(vinyl sulfone), poly(ethersulfone), poly(vinyl nitrile), polyacrylate, polymethacrylate, poly(vinyl acetate), polycaprolactone, cellulose triacetate, and polyvinylpyrrolidone.

9. The conductive material slurry of claim 1, wherein the group which is capable of hydrogen bonding comprises at least one of a hydroxy group, a carboxyl group, a hydroperoxy group, a hemiacetal group, a hemiketal group, an oxime group, a phosphono group, a phosphate group, a carboxamide group, an amine group, a primary ketimine group, a primary aldimine group, a ketone group, a carbonate ester group, a carboalkoxy group, a methoxy group, a peroxy group, an ether group, an acetal group, a ketal group, an ortho-ester group, a methylenedioxy group, an ortho carbonate ester group, a cyanic acid salt group, a nitrate salt group, a nitro-oxy group, a sulfo group, a thiono ester group, a boronate group, a borinate group, a quaternary ammonium ion group, a secondary ketimine group, a secondary aldimine group, an imide group, an azide group, an azo group, an isocyanic acid salt group, an isonitrile group, a nitro group, a nitroso group, a carbam acid salt group, and an isothiocyanate group.

10. The conductive material slurry of claim 1, wherein a weight average molecular weight (M_{w}) of the second dispersant is 10,000 to 350,000 g/mol.

11. The conductive material slurry of claim 1, wherein the second dispersant comprises at least one selected from the group consisting of cellulose, ethyl cellulose, poly(vinyl alcohol), poly(acrylic acid), poly(methacrylic acid), cellulose acetate, cellulose nitrate, chitosan, cellulose propionate, cellulose acetate propionate, cellulose acetate butyrate, methyl cellulose, ethyl methyl cellulose, hydroxyethyl cellulose, hydroxypropyl cellulose, hydroxyethylmethyl cellulose, hydroxypropylmethyl cellulose, ethyl hydroxyethyl cellulose, polyhydroxyethylmethacrylate, polyethyleneimine, alginate, polyhydroxyethylacrylate, starch, hyaluronic acid, pullulan, pectin, polyglycerol, lignin, xylan, galactomannan, and polyhydroxystyrene.

12. The conductive material slurry of claim 1, wherein a weight ratio of the first dispersant and the second dispersant is 1:0.4 to 1:2.3.

13. The conductive material slurry of claim 1, wherein, with respect to 100 parts by weight of the conductive material, a content of the first dispersant is 2.2 to 200 parts by weight, and a content of the second dispersant is 1 to 90 parts by weight.

14. The conductive material slurry of claim 1, wherein the solvent comprises a polar aprotic solvent.

15. The conductive material slurry of claim 1, wherein, based on a total solid content of the conductive material slurry, a carbon content is 82 wt% or more.

16. A positive electrode, comprising:
a conductive material;
a dispersant;
a positive electrode active material; and
a binder,
wherein the dispersant comprises a first dispersant and a second dispersant different from the first dispersant,
the first dispersant comprises a polymer having a heteroatom, and
the second dispersant comprises a polymer having a group which is capable of hydrogen bonding.

17. The positive electrode of claim 16, wherein the positive electrode active material comprises a lithium transition metal oxide, and
the lithium transition metal oxide comprises at least one selected from the group consisting of Liₓ₁CoO₂(0.5<x1<1.3), Liₓ₂NiO₂(0.5<x2<1.3), Liₓ₃MnO₂(0.5<x3<1.3), Liₓ₄Mn₂O₄(0.5<x4<1.3), Liₓ₅(Niₐ₁Co_{b1}Mn_{c1})O₂(0.5<x5<1.3, 0<a1<1, 0<b1<1, 0<c1<1, a1+b1+c1=1), Liₓ₆Ni_{1-y1}Co_{y1}O₂(0.5<x6<1.3, 0<y1<1), Liₓ₇Co_{1-y2}Mn_{y2}O₂(0.5<x7<1.3, 0≤y2<1), Liₓ₈Ni_{1-y3}Mn_{y3}O₂(0.5<x8<1.3, 0≤y3<1), Liₓ₉(Niₐ₂Co_{b2}Mn_{c2})O₄(0.5<x9<1.3, 0<a2<2, 0<b2<2, 0<c2<2, a2+b2+c2=2), Liₓ₁₀Mn_{2-z1}Ni_{z1}O₄(0.5<x10<1.3, 0<z1<2), Liₓ₁₁Mn_{2-z2}Co_{z2}O₄(0.5<x11<1.3, 0<z2<2), Liₓ₁₂CoPO₄(0.5<x12<1.3), Liₓ₁₃FePO₄(0.5<x13<1.3), Li_{A1}Ni_{B1}Co_{C1}Mn_{D1}Al_{E1}O₂(A1=0.5 or more and 1.3 or less, B1+C1+D1+E1=1, 0<B1<1, 0<C1<1, 0<D1<1, 0<E1<1), Li_{A2}Ni_{B2}Co_{C2}Al_{D2}O₂(A2=0.5 or more and 1.3 or less, B2+C2+D2=1, 0<B2<1, 0<C2<1, 0<D2<1), and Li_{A3}Mn_{B3}Fe_{C3}PO₄(0.5<A3<1.3, B3+C3=1, 0<B3<1, 0<C3<1).

18. A secondary battery, comprising:
the positive electrode of claim 16;
a negative electrode;
a separator interposed between the positive electrode and the negative electrode; and
an electrolyte solution.
